# EUROPEAN PATENT APPLICATION

(11) **EP 2 533 533 A1**
(43) Date of publication of application: **12.12.2012**
(21) Application number: 12169579.5
(22) Date of filing: 25.05.2012
(51) Int. Cl.: H04N 7/173, H04N 7/18, H04N 21/6587, H04N 21/218

(54) **Display Control Device, Display Control Method, Program, and Recording Medium**

(30) Priority: 08.06.2011 JP 2011128100
(71) Applicant: Sony Corporation, Tokyo 108-0075 (JP)
(72) Inventor: Sasaki, Takehiko, Minato-ku, Tokyo 108-0075 (JP)
(74) Representative: Keston, Susan Elizabeth

(57) **Abstract**

A display control device according to an embodiment of the present technology obtains each image taken by several cameras, detects a particular object displayed in a certain image out of the obtained images, and performs control so as to set a mode to display an object in an image different from the certain image where the particular object is detected using the object in the certain image as a reference and to display the object in the different image on the same screen when the same object is detected in the different image in the obtained several images.

## Description

The present technology relates to a display control device, a display control method, a program, and a recording medium.

In recent years, price for a network camera or a camera for a broadcast station has been decreased. In association with this, for example, a system in which the same area is covered by several cameras to take an image has become popular.

In this manner, a system in which the same area is covered by several cameras to take an image has become popular; therefore, attention has been paid on, for example, improvement in perpetrator identification accuracy for security purpose and new display systems regarding contents of events such as sport and concert.

For example, it has become possible to switch an image, in which the same thing or person (object) is observed from several viewpoints, according to a user's preference to be displayed.

In addition, processing performance of a camera, a browsing device, and a relay server is improved, and a technology to detect an object such as a person and a thing from an image has been advanced; therefore, it has become possible to extract relevance of objects of several images and to judge identicalness.

For example, the following technology is proposed: an image in which a portion that does not exist on the same plane as a road surface is removed from an image that has been subjected to projection conversion appropriate for each of several monitoring camera images is composited to be displayed on a map and correlation of each monitoring camera image is systematically adjusted on the map, thereby enabling a road condition in a monitoring area to be monitored on the map as an image (for example, see Japanese Patent Laid-Open No. 2005-286685).

However, terminals having various display functions and input systems such as a mobile terminal and a tablet has been used as a device to browse an image in addition to a conventional PC. In addition, when an image is displayed by switching several viewpoints, it is preferable that display transition is completed as quickly as possible.

For example, in a technology described in Japanese Patent Laid-Open No. 2005-286685, if a display area of a terminal is small, it may be difficult to recognize an image on a screen when transition is made to a map mode which involves high resolution display. Because it is necessary to display the map mode in each case to display an image from a different viewpoint, a user sometimes feels that the operation is bothersome and it can be difficult to realize high speed display transition.

The present technology is disclosed in consideration of such a situation, and makes it possible to complete display transition as quickly as possible and improve user operability when an image is displayed on a screen by switching several viewpoints.

Various respective aspects and features of the invention are defined in the appended claims. Combinations of features from the dependent claims may be combined with features of the independent claims as appropriate and not merely as explicitly set out in the claims.

Embodiments of the invention relate to a display control device, a display control method, a program, and a recording medium that can complete display transition as quickly as possible and may improve user operability when an image is displayed on a screen by switching several viewpoints.

An aspect of the present technology is a display control device including: an image acquisition unit obtaining each image taken by several cameras; an object detection unit detecting a particular object displayed in a certain image out of the obtained images; and a display control unit performing control so as to set a mode to display an object in an image different from the certain image where the particular object is detected using the object in the certain image as a reference and to display the object in the different image on the same screen when the same object is detected in the different image in the obtained several images.

The display control unit can set a location to display the object in the different image and a shape of the object in the different image on the screen, based on a location and the imaging direction of the camera that takes the object in the certain image.

The display control unit can further set a central axis of the object in the certain image and the object in the different image, and turn around the object in the certain image and the object in the different image with the central axis being the center to display the object in the certain image and the object in the different image on the screen based on an operation by a user.

The display control unit can display a certain detection frame around the object when the same object is detected in the image different from the certain image where the particular object is detected.

The display control unit includes, as display control modes, a normal mode in which a predetermined image out of the images taken by the several cameras is displayed as the certain image and a lock on mode in which the object in the certain image and the object in the different image are displayed on the same screen when the object in the certain image is selected by the user in a case where the same object is detected in the different image, and can enlarge an image of the object to be displayed in the lock on mode.

The object detection unit can extract a feature amount of the detected object and obtain information showing an attribute of the object by searching a certain database based on the feature amount, and the display control unit can perform control so as to display the attribute together with the object.

An aspect of the present technology is a display control method including: obtaining each image taken by several cameras by an image acquisition unit; detecting a particular object displayed in a certain image out of the obtained images by an object detection unit; and performing control so as to set a mode to display an object in an image different from the certain image where the particular object is detected using the object in the certain image as a reference and to display the object in the different image on the same screen by a display control unit when the same object is detected in the different image in the obtained several images.

An aspect of the present technology is a program causing a computer to function as a display control device that includes: an image acquisition unit obtaining each image taken by several cameras; an object detection unit detecting a particular object displayed in a certain image out of the obtained images; and a display control unit performing control so as to set a mode to display an object in an image different from the certain image where the particular object is detected using the object in the certain image as a reference and to display the object in the different image on the same screen when the same object is detected in the different image in the obtained several images.

In an aspect of the present technology, each image taken by several cameras is obtained, a particular object displayed in a certain image out of the obtained images is detected, and control is performed so as to set a mode to display an object in an image different from the certain image where the particular object is detected using the object in the certain image as a reference and to display the object in the different image on the same screen when the same object is detected in the different image in the obtained several images.

According to an embodiment of the present technology, it is possible to complete display transition as quickly as possible and improve user operability when an image is displayed on a screen by switching several viewpoints.

Embodiments of the invention will now be described with reference to the accompanying drawings, throughout which like parts are referred to by like references, and in which:
FIG. 1 is a diagram explaining a system for imaging an object according to an embodiment of the present technology;
FIG. 2 is a block diagram illustrating a configuration example according to one embodiment of a monitoring system to which the present technology is applied;
FIG. 3 is a block diagram illustrating another configuration example of the monitoring system to which an embodiment of the present technology is applied;
FIG. 4 is a block diagram illustrating a detailed configuration example of a camera shown in FIG. 1;
FIG. 5 is a block diagram illustrating a detailed configuration example of a browsing terminal shown in FIG. 2 or FIG. 3;
FIG. 6 is a block diagram illustrating a functional configuration example of software such as a program executed in a CPU shown in FIG. 5;
FIG. 7 is a diagram illustrating an example of an image displayed on a display of a browsing terminal in a normal mode;
FIG. 8 is a diagram illustrating an example of switching of a display mode;
FIG. 9 is a diagram illustrating an example of an image displayed on a display of a browsing terminal in a lock on mode;
FIG. 10 is a diagram explaining an example of an operation to display an object image by turning around the object image;
FIG. 11 is a diagram illustrating another example of switching of a display mode;
FIG. 12 is a diagram illustrating another example of an image displayed on a display of a browsing terminal in a normal mode;
FIG. 13 is a diagram explaining switching of a viewpoint in a related art;
FIG. 14 is a flow chart explaining an example of an image display processing; and
FIG. 15 is a flow chart explaining an example of a lock on mode display processing.

Hereinafter, preferred embodiments of the present disclosure will be described in detail with reference to the appended drawings. Note that, in this specification and the appended drawings, structural elements that have substantially the same function and structure are denoted with the same reference numerals, and repeated explanation of these structural elements is omitted.

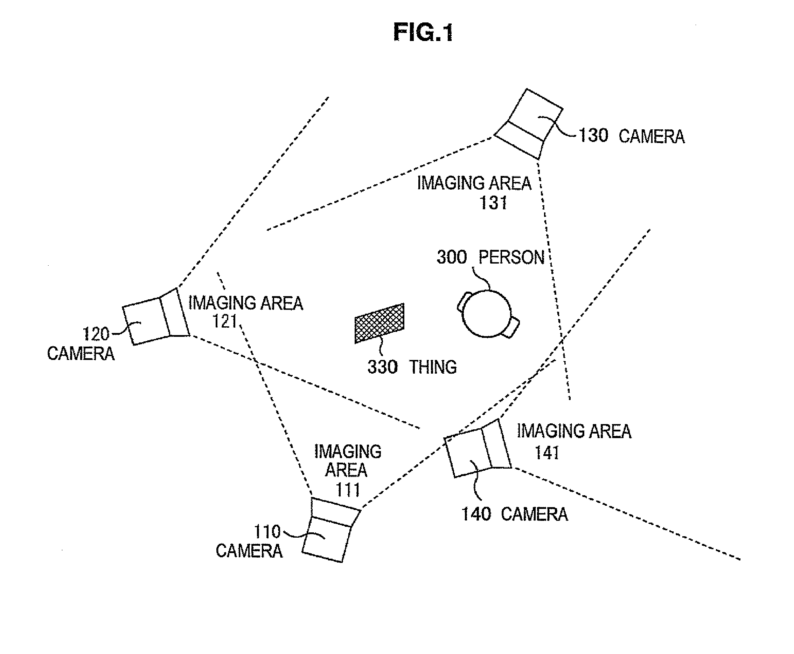

FIG. 1 is a diagram explaining a system for imaging an object according to an embodiment of the present technology. In this example, a person 300 and a thing 330 are imaged as objects by several cameras. In addition, a camera 110, a camera 120, a camera 130, and a camera 140 are provided in this example.

In the example of FIG. 1, the objects are located within an imaging area of the camera 11 ©, the camera 120, and the camera 130 and located outside an imaging area of the camera 140. Therefore, the objects are imaged by the three cameras at the same time.

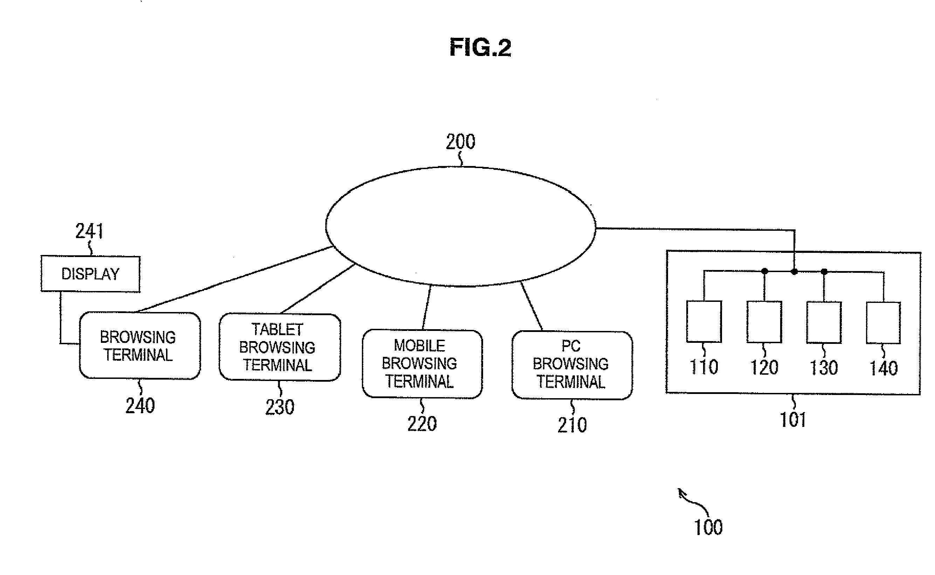

FIG. 2 is a block diagram illustrating a configuration example according to one embodiment of a monitoring system to which the present technology is applied. This monitoring system 100 includes a camera system 101, a network 200, a browsing terminal 210, a browsing terminal 220, a browsing terminal 230, and a browsing terminal 240.

The camera system 101 includes, for example, the four cameras including the camera 110 to the camera 140, as described above with reference to FIG. 1, and an object existing within an imaging area of each camera is to be imaged. Data of an image taken by each camera constituting the camera system is transmitted to the network 200. At that time, the data of the image of each camera is transmitted with the data being associated with, for example, information on installation location of each camera (for example, coordinate location) and information on the imaging direction of each camera (for example, vector representing an optical axis that is the center of the imaging area of each camera).

The network 200 is built by, for example, internet, intranet, and mobile telephone network.

Each of the browsing terminals 210 to 240 is configured so as to be connectable to the network 200, and can obtain the data of the image transmitted from the camera system 101 to display an image.

The browsing terminals 210 is configured as a personal computer, for example. The browsing terminal 220 is configured as a mobile terminal such as a mobile telephone and a smartphone, for example. The browsing terminal 230 is configured as a tablet terminal such as PDA, for example. Each of the browsing terminals 210 to 230 is configured to be integrated with a display unit such as a display.

The browsing terminal 240 is configured as a digital apparatus having a microcomputer and the like for example, and causes an image to be displayed on a display 241, which is an external apparatus connected to the browsing terminal 240.

Each of the browsing terminals 210 to 240 can, as described later, display an image taken by the camera system 101 in a normal mode as well as in a lock on mode. Detail of the normal mode and the lock on mode will be described later.

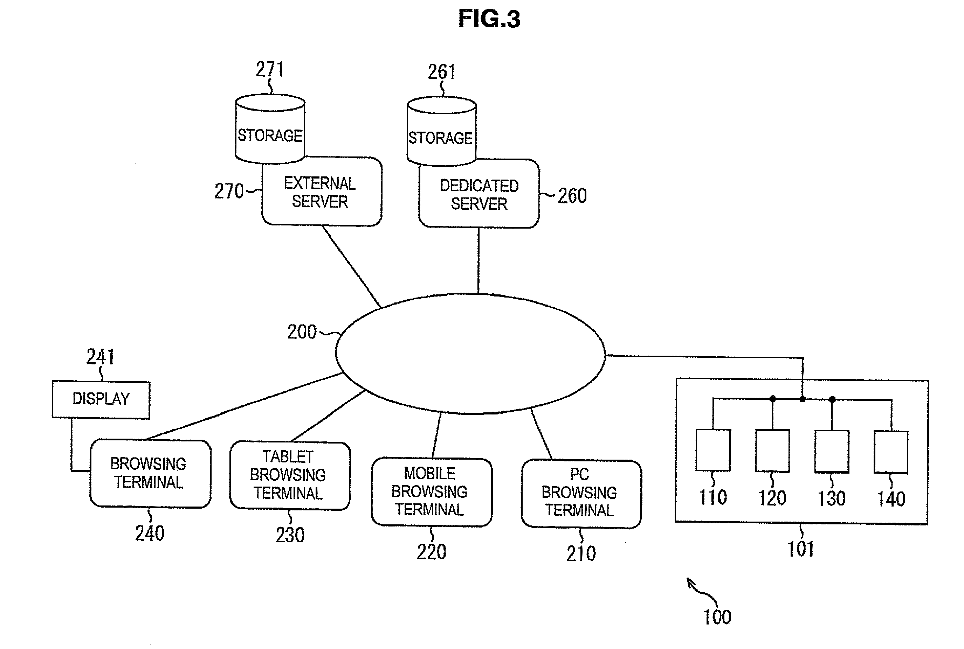

Alternatively, the monitoring system 100 may be configured as shown in FIG. 3, for example. In this example, the monitoring system 100 includes the camera system 101, the network 200, the browsing terminal 210, the browsing terminal 220, the browsing terminal 230, the browsing terminal 240, a dedicated server 260, and an external server 270.

The dedicated server 260 is configured as a computer and the like possessed by a corporation operating the monitoring system 100, for example, and accumulates the data transmitted from the camera system 101 in a storage 261, for example. The dedicated server 260 transmits the data accumulated in the storage 261 to the browsing terminals 210 to 240 that have accessed via the network 200.

The external server 270 is configured as a computer and the like operated by an internet service provider or the like, for example, and is a server lent to the corporation operating the monitoring system 100. As with the dedicated server 260, the external server 270 accumulates the data transmitted from the camera system 101 in a storage 271, for example. The external server 270 transmits the data accumulated in the storage 271 to the browsing terminals 210 to 240 that have accessed via the network 200.

That is, in the configuration illustrated in FIG. 3, the browsing terminals 210 to 240 do not obtain the data directly from the camera system 101, but obtain the data indirectly via the dedicated server 260 or the external server 270.

The monitoring system 100 may be configured in this manner.

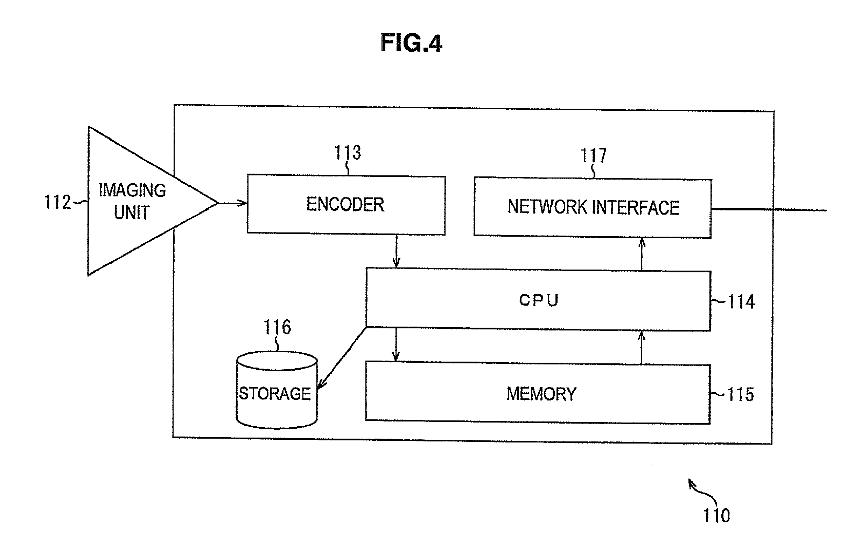

FIG. 4 is a block diagram illustrating a detailed configuration example of the camera 110 shown in FIG. 1. As shown in FIG. 4, the camera 110 includes an imaging unit 112, an encoder 113, a CPU 114, a memory 115, a storage 116, and a network interface 117.

The imaging unit 112 includes a photoelectric conversion element such as a CCD (Charge Coupled Devices) imaging sensor and a CMOS (Complementary Metal Oxide Semiconductor) imaging sensor, and outputs an image signal.

That is, light taken from outside passes through an optical system and is incident on the photoelectric conversion element, and an image signal that is an electrical signal corresponding to an amount of the received light is output. This image signal is subjected to A/D conversion, in other words, is sampled to be quantized (digitized), and is subjected to a certain image processing to be output to the encoder 113.

The encoder 113 supplies image data obtained by encoding the image signal output from the imaging unit 112 in accordance with certain format such as MPEG (Moving Picture Experts Group) format and JPEG (Joint Photographic Experts Group) format to the CPU (Central Processing Unit) 114.

The CPU 114 executes software such as a program using the memory 115, and processes the data output from the encoder 113. For example, a processing such as packet generation to transmit image data in association with information on installation location of a camera (for example, coordinate location) and information on the imaging direction of each camera (for example, vector representing an optical axis that is the center of the imaging area of each camera) is performed.

The CPU 114 holds data such as image data in the storage 116 including an HDD and the like as necessary.

The network interface 117 includes a LAN card and the like, for example, and controls transmission and reception of data with the network 200.

The camera 110 is configured in this manner. Here, although the configuration shown in FIG. 4 is explained as the configuration example of the camera 110, the configuration shown in FIG. 4 is applied to the cameras 120 to 140.

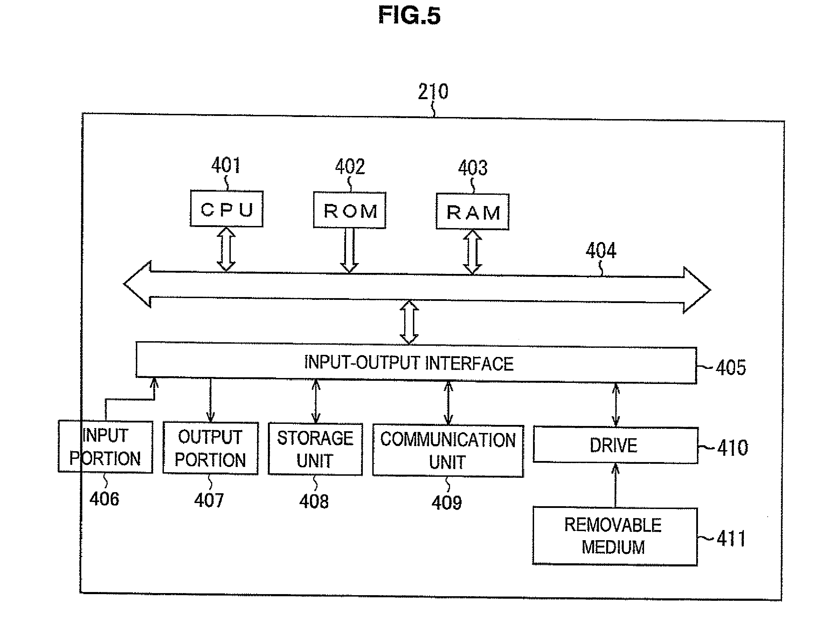

FIG. 5 is a block diagram illustrating a detailed configuration example of the browsing terminal 210 shown in FIG. 2 or FIG. 3. In FIG. 5, a CPU 401 executes various types of processings in accordance with a program stored in a ROM (Read Only Memory) 402 or a program loaded from a storage unit 408 to a RAM (Random Access Memory) 403. Data necessary for the CPU 401 to execute various types of processings and the like are stored in the RAM 403 as appropriate.

The CPU 401, the ROM 402, and the RAM 403 are connected to each other via a bus 404. An input-output interface 405 is also connected to the bus 404.

An input portion 406 including a keyboard, a mouse, and the like, an output portion 407 including a display such as a LCD (Liquid Crystal Display), a speaker, and the like, the storage unit 408 including a hard disk and the like, and a communication unit 409 including network interface cards such as a modem and a LAN card, and the like are connected to the input-output interface 405. The communication unit 409 performs a communication processing via the network 200.

A drive 410 is connected to the input-output interface 405 as necessary. Also, a removable medium 411 such as a magnetic disc, an optical disk, a magneto optical disk, and a semiconductor memory is connected as appropriate, and a computer program read therefrom is installed to the storage unit 408 as necessary.

For example, when a series of processings is executed by software in the browsing terminal 210, a program constituting the software is installed from a network such as internet or a recording medium including the removable medium 411 and the like.

Here, although FIG. 5 is explained as a configuration example of the browsing terminal 210, the configuration shown in FIG. 5 is applied to the browsing terminals 220 to 240. However, actual configuration of the input portion 406 and the output portion 407 varies depending on a model. In addition, the storage unit 408 is provided as necessary, for example.

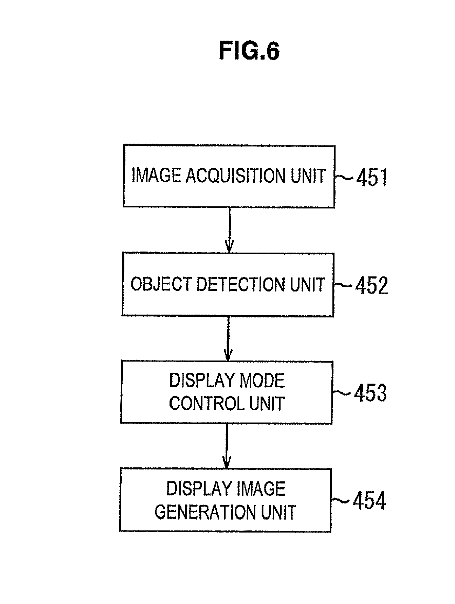

FIG. 6 is a block diagram illustrating a functional configuration example of software such as a program executed in the CPU 401 shown in FIG. 5.

An image acquisition unit 451 shown in FIG. 6 controls acquisition of data of an image taken by each camera transmitted from the camera system 101 via the network 200.

An object detection unit 452 analyzes the image obtained by the image acquisition unit 451 and controls detection of an object displayed in the image. The object detection unit 452 determines whether a person is displayed in the image of the data obtained by the image acquisition unit 451, for example. If it is determined that a person is displayed, the object detection unit 452 detects an area of the image where the person is displayed. Alternatively, the object detection unit 452 determines whether a particular thing is displayed in the image of the data obtained by the image acquisition unit 451, for example. If it is determined that a particular thing is displayed, the object detection unit 452 detects an area of the image where the thing is displayed.

When a person is detected, the object detection unit 452 determines whether the same person is displayed in an image taken by several cameras of the camera system 101. The object detection unit 452 extracts information such as a ratio of head to the whole body of the person, eye color, and hair color as a feature amount. Then, the object detection unit 452 determines whether the same person is displayed in the image taken by the several cameras by comparing the feature amount of the person in the image taken by the several cameras.

Further, when a person is detected, the object detection unit 452 controls an access to the dedicated server 260 or the external server 270 via the network 200 as necessary, for example. The object detection unit 452 refers to a person database stored in the storage 261, the storage 271, and the like for example, and judges identicalness of the person stored in the person database and the person detected.

In the person database, feature amounts of several persons are stored, for example. For example, information such as a ratio of head to the whole body, eye color, and hair color is stored as a feature amount. The object detection unit 452 judges identicalness of the person stored in the person database and the person detected by comparing the feature amount of the person detected and the feature amount of each person stored in the person database, for example.

In addition, attributes of the person (for example, information such as age, sex, occupation, and criminal record) are stored in the person database, for example. Therefore, the attributes of the displayed person can be also displayed on each browsing terminal, for example.

A display mode control unit 453 determines which one of the normal mode or the lock on display mode is to be used to display an image based on an operation by a user that is input via the input portion 406, for example, and outputs information specifying the mode to be displayed to a display image generation unit 454.

The display image generation unit 454 generates display data for the normal mode or the lock on display mode and an image signal corresponding to the display data to supply them to the display of the output portion 407.

Next, an explanation will be given on an image displayed on a display of the browsing terminals 21 to 240.

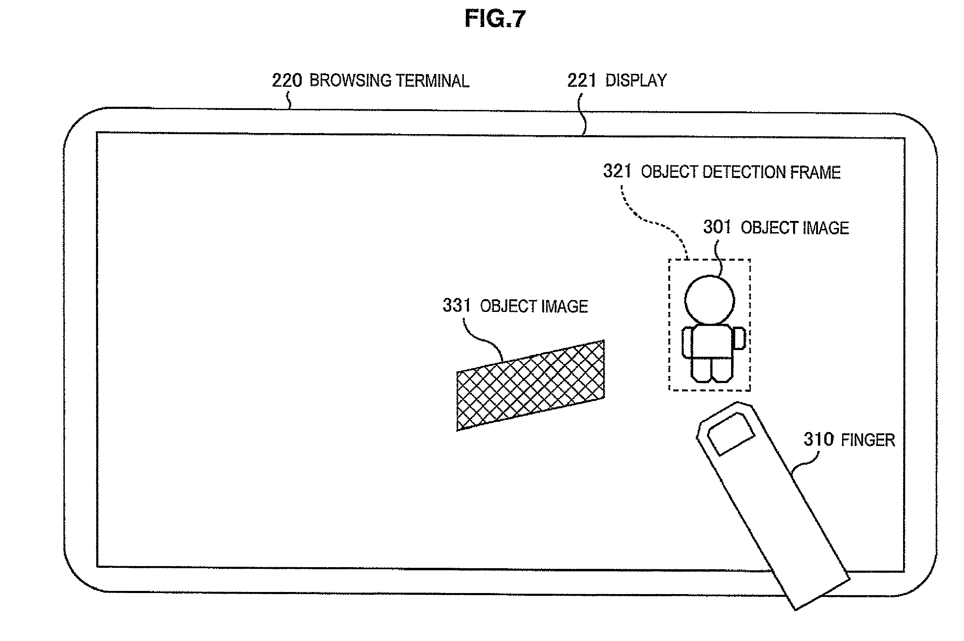

FIG.7 is a diagram illustrating an example of an image displayed on a display 221 of the browsing terminal 220. As described above, the browsing terminal 220 is configured as a mobile terminal such as a mobile telephone and a smartphone, for example.

FIG. 7 shows an example of a display screen in the normal mode. An image (object image) 301 of the person 300 and an image (object image) 331 of the thing 330 taken by the camera 110 are displayed.

Also, as shown in FIG. 7, an object detection frame 321 is displayed around the object image 301. The object detection frame 321 is displayed since an image of a person is detected by the object detection unit 452 in an image taken by the camera 110, and an image of the same person is also detected in an image taken by a different camera. For example, the detection frame 321 is displayed if the same person is detected in an image taken by the camera 120 and an image taken by the camera 130. In this example, the detection frame 321 is displayed as a rectangular dotted line.

The display 221 is configured as a capacitance system touch screen for example, and detects change in capacitance and detects approach of a user's finger and like. For example, when a user brings a finger 310 closer to the display 221, change in capacitance on a certain portion on the panel is detected to output a signal representing the portion.

In the state shown in FIG. 7, when the user brings the finger 310 closer to the object image 301, the object image 301 is selected, and the display screen is switched to the lock on mode. When the object image around which the detection frame is displayed is selected on the screen displayed in the normal mode, the display mode control unit 453 switches the display mode from the normal mode to the lock on mode.

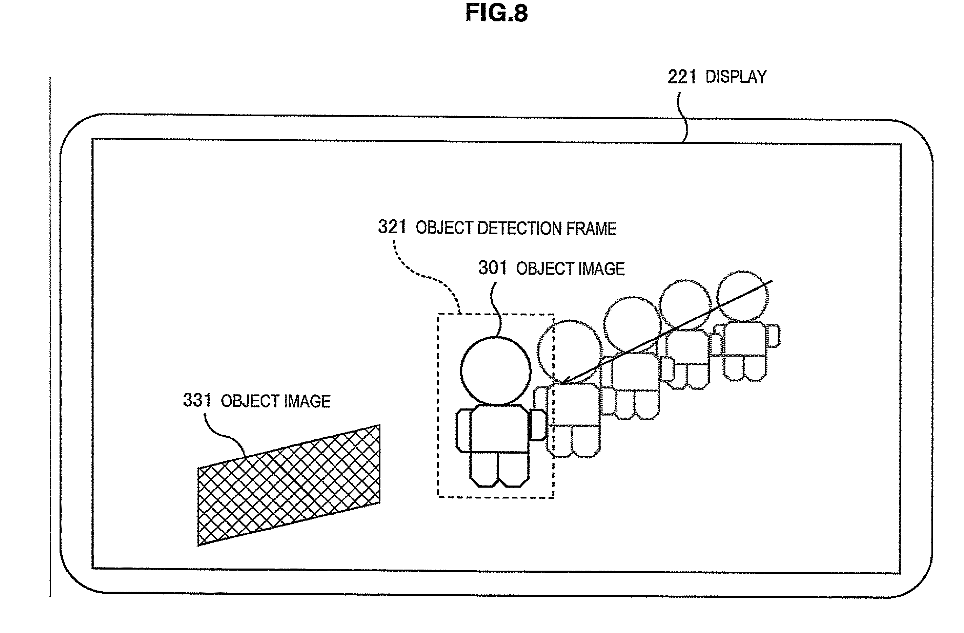

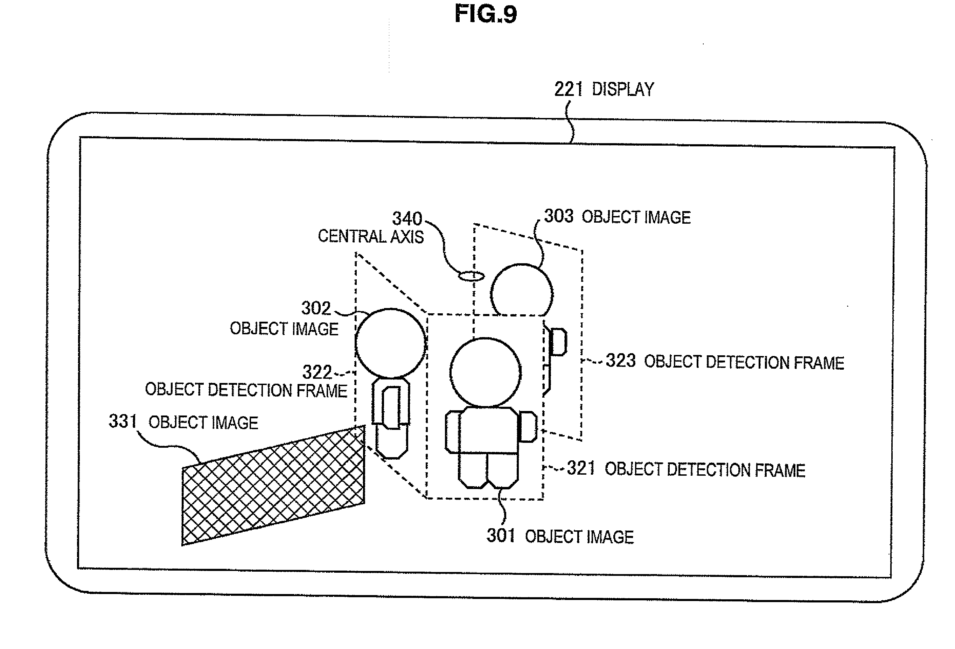

FIG. 8 is a diagram explaining transition when an image displayed on the display 221 is switched to display in the lock on mode. As shown in FIG. 8, selection of the object image 301 moves the object image 301 to the center of the screen first, and then the object image 301 is enlarged to be displayed. After that, the image on the display 221 becomes as shown in FIG. 9.

When the object image 301 is enlarged to be displayed, the object image 301 may be subjected to pixel supplement (up sample) or the like to be converted to a high resolution image.

FIG. 9 is a diagram illustrating a display example on the display 221 in the lock on mode. As shown in FIG. 9, in the lock on mode, an object image taken by a different camera is displayed in addition to the object image 301. In this example, an object image 302 that is an image of the person 300 taken by the camera 120 and an object image 303 that is an image of the person 300 taken by the camera 130 are displayed together with the object image 301.

In this example, the object image 302 is displayed together with an object detection frame 322, and the object image 303 is displayed together with an object detection frame 323.

The object image 302 and the object image 303 are displayed relative to positional relationship of the cameras 110 to 130, with display location of the object image 301 being a reference. As described above, data transmitted from each camera is correlated with information on installation location of cameras (for example, coordinate location) and information on the imaging direction of each camera (for example, vector representing an optical axis that is the center of the imaging area of each camera). Based on the information, the display image generation unit 454 sets display location and angle of the object image 302 and the object image 303 in the case where the display location of the object image 301 is used as a reference.

That is, by setting the display location and the angle of the object image 302 and the object image 303, size, shape, and the like of the object image 302 and the object image 303 are changed as appropriate.

A user can recognize the direction in which each of the object images 301 to 303 is taken by the object detection frames 321 to 323. That is, although the object detection frame 321 corresponding to the object image 301 that is a reference is shown as a rectangle on the screen, the object detection frame 322 and the object detection frame 323 are shown as parallelograms on the screen.

In the case of display in the lock on mode, the object detection frame may not be displayed. In addition, for example, when an image is displayed in the lock on mode, information regarding attributes of a person obtained based on the person database may be displayed.

A central axis 340 is displayed in the center of the object image 301, the object image 302, and the object image 303. The central axis 340 is also set by the display image generation unit 454 based on information on installation location of cameras (for example, coordinate location) and information on the imaging direction of each camera (for example, vector representing an optical axis that is the center of the imaging area of each camera). That is, since the image of the person 300 is taken by the three cameras from different directions, it is possible to estimate depth (thickness) of the person 300. For example, based on the depth of the person 300 thus estimated, the person 300 is assumed to be almost cylindrical and a central axis of the cylinder is set as the central axis 340.

As shown in FIG. 9, when an image is displayed in the lock on mode, a user can turn around the object image with the central axis 340 being the center.

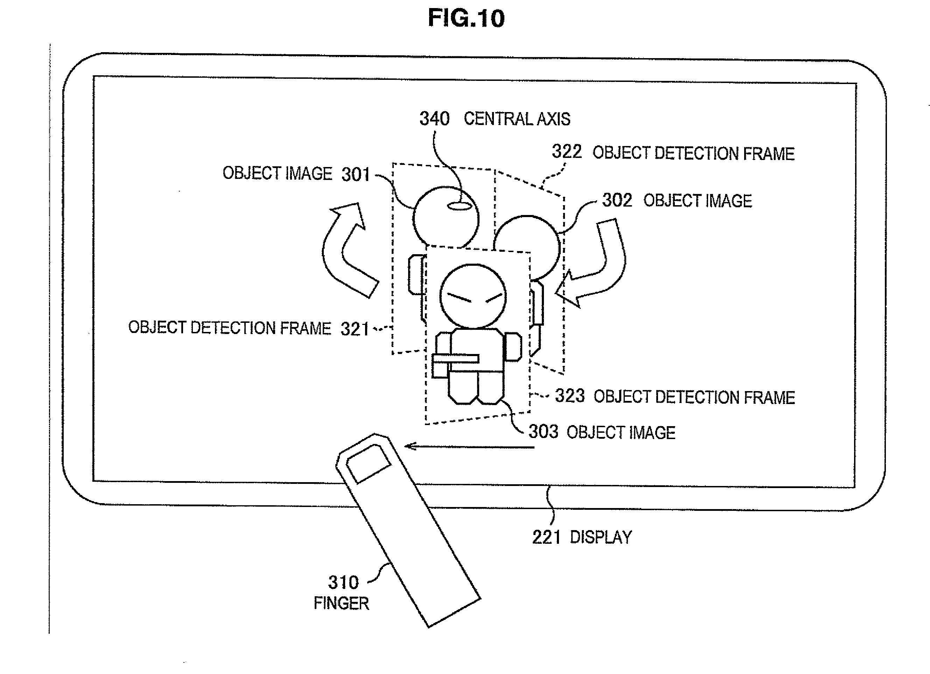

For example, if the user swipes the display 221 from right to left while bringing the finger 310 closer to the display 221, the object image of the person 300 is turned around. For example, as shown in FIG. 10, the object image displayed on the display 221 is turned around.

In the example of FIG. 10, since the user has swiped with the finger 310, the object image is turned around in the counterclockwise direction with the central axis 340 being the center. Therefore, the object imagé 303 is displayed at the front though the object image 301 is displayed at the front (as a reference) in FIG. 9.

In this case, it appears that the person 300 displayed as the object image 303 has a gun and is a dangerous person. In this manner, the object (for example, the person 300) seen from a different direction (different viewpoint) can be recognized by turning around the object image displayed in the lock on manner. Therefore, for example, it is possible to easily check whether a person in an image is a dangerous person or not (whether the person is armed or not).

Further, for example, it also becomes possible to check the attributes of the person by referring to the information obtained based on the person database.

In the state shown in FIG. 10, when the user brings the finger 310 closer to the object image 303, the object image 303 is selected, and the display screen is switched to the normal mode. When the object image (in this case, the image of the person 300) subjected to display in the lock on mode is selected on the screen displayed in the lock on mode, the display mode control unit 453 switches the display mode from the lock on mode to the normal mode.

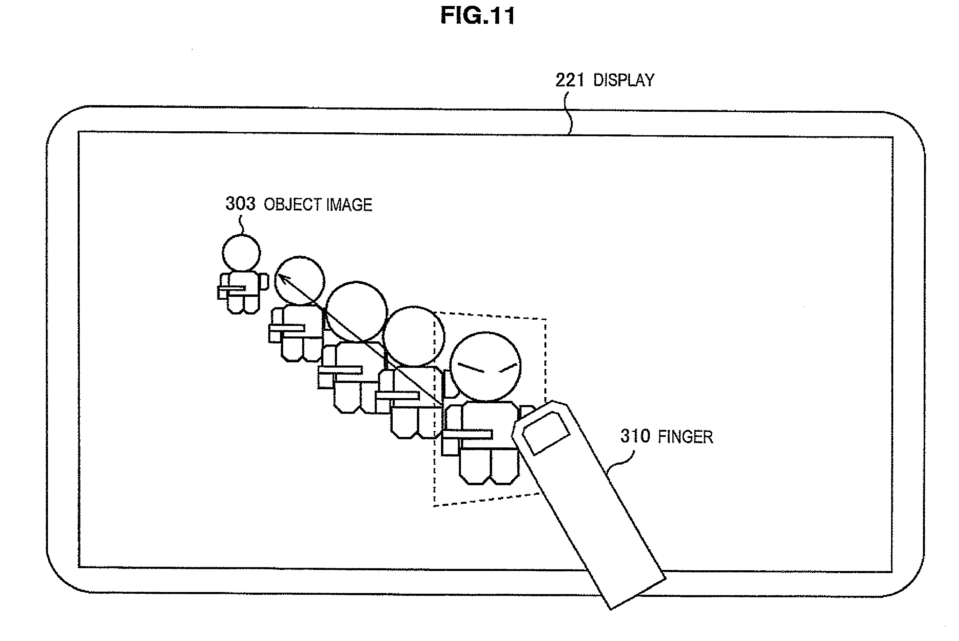

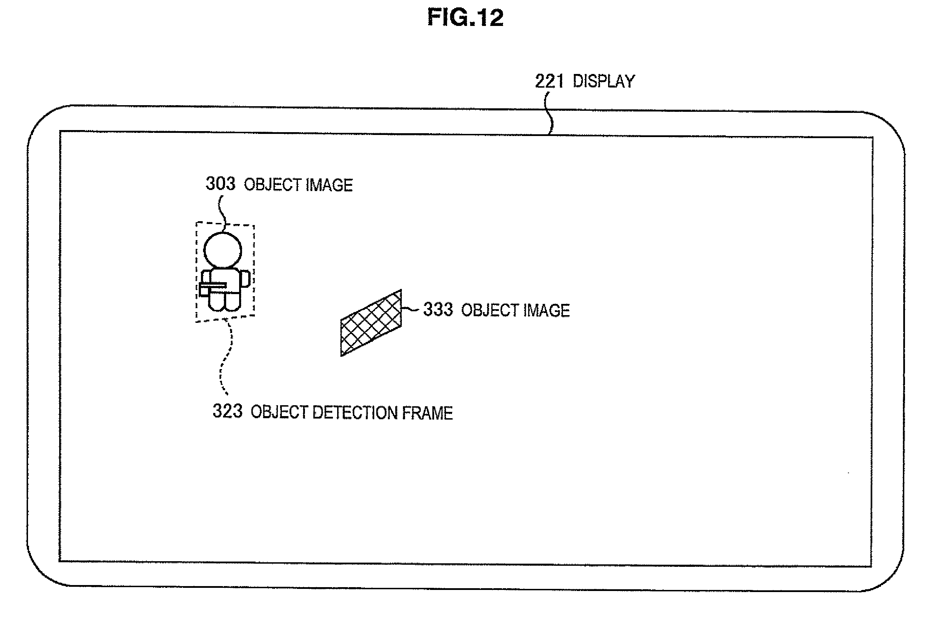

FIG. 11 is a diagram explaining transition when an image displayed on the display 221 is switched to be displayed in the normal mode. As shown in FIG. 11, selection of the object image 303 moves the object image 303 to the display location in the image taken by the camera 130 (in this case, upper left of the screen). At that time, the object image 303 that has been enlarged to be displayed in the lock on mode is reduced. After that, the image on the display 221 becomes as shown in FIG. 12.

FIG. 12 is a diagram illustrating another example of an image displayed on the display 221 of the browsing terminal 220. FIG12 is an example of display screen in the normal mode, and the image (object image) 303 of the person 300 and an image (object image) 333 of the thing 330 taken by the camera 130 are displayed. Also, as shown in FIG. 12, the object detection frame 323 is displayed around the object image 303.

In this manner, display mode of an image to be displayed on the display 221 of the browsing terminal 220 is switched.

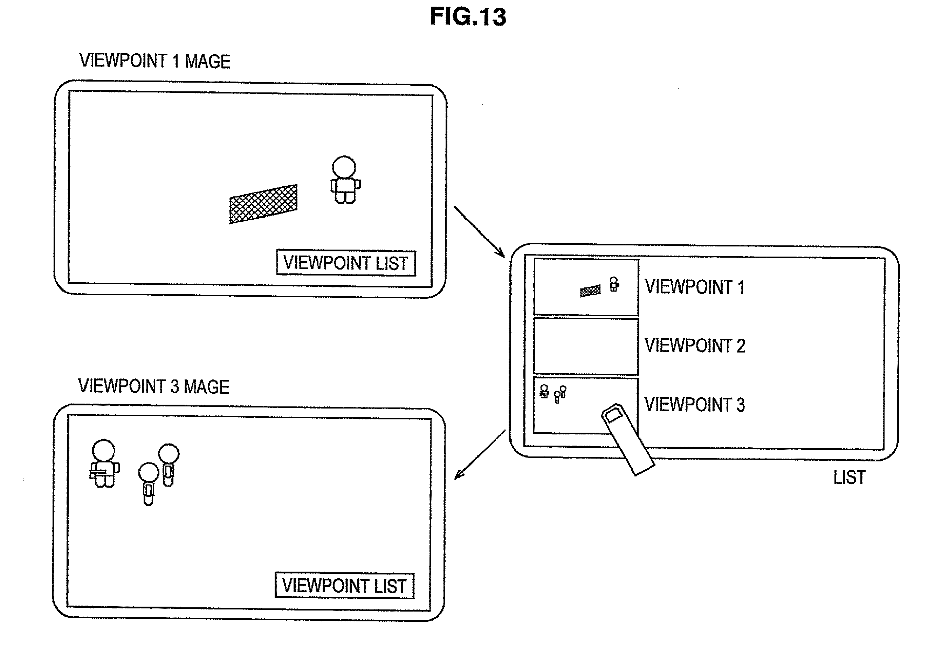

In a related art, for example, display on the screen is switched as shown in FIG. 13. In FIG. 13, for example, it is assumed that a viewpoint 1 image, a viewpoint 2 image, and a viewpoint 3 image are obtained as images taken by three different cameras.

Now, it is assumed that the user displays the viewpoint 1 image on the display of the browsing terminal and it is switched to display of the viewpoint 3 image. In this case, for example, while the viewpoint 1 image is displayed, the user selects an icon which says "viewpoint list" in the lower right part of the screen to switch the display on the display of the browsing terminal to the list, as shown in FIG. 13. Accordingly, each of the viewpoint 1 image, the viewpoint 2 image, and the viewpoint 3 image are reduced to be displayed on the display of the browsing terminal.

Then, the user selects the viewpoint 3 image which the user wants to browse on the screen showing the list (for example, selects the image by bringing a finger closer to the image). Accordingly, the viewpoint 3 image is enlarged to be displayed on the display of the browsing terminal.

According to an embodiment of the present technology on the other hand, as described above with reference to FIG. 9 and FIG. 10 for example, the object image is displayed in the lock on mode; therefore, it is not necessary to make transition to the screen showing the list as in the related art.

For example, when a browsing terminal having small display area such as a mobile terminal is used, individual images need to be displayed extremely small in order to display a list of images with a number of viewpoints. Therefore, it is likely that images on the screen are difficult to be recognized when transition is made to the screen showing the list.

When an image is displayed by switching several viewpoints, it is preferable that display transition is completed as quickly as possible; however, in the related art, viewpoint images have been switched through the list each time, like the viewpoint 1 image, the list, and then the viewpoint 3 image, for example. Therefore, it has taken some time to complete display transition.

According to the embodiment of the present technology on the other hand, as described above with reference to FIG. 9 and FIG. 10 for example, the viewpoint image (object image) can be switched only by operating so as to turn around the object image displayed in the lock on mode. Therefore, it is possible to complete display transition quickly, and user operability also improves.

According to the embodiment of the present technology in this manner, when an image is displayed on the screen by switching several viewpoints, it is possible to complete display transition as quickly as possible and to improve user operability.

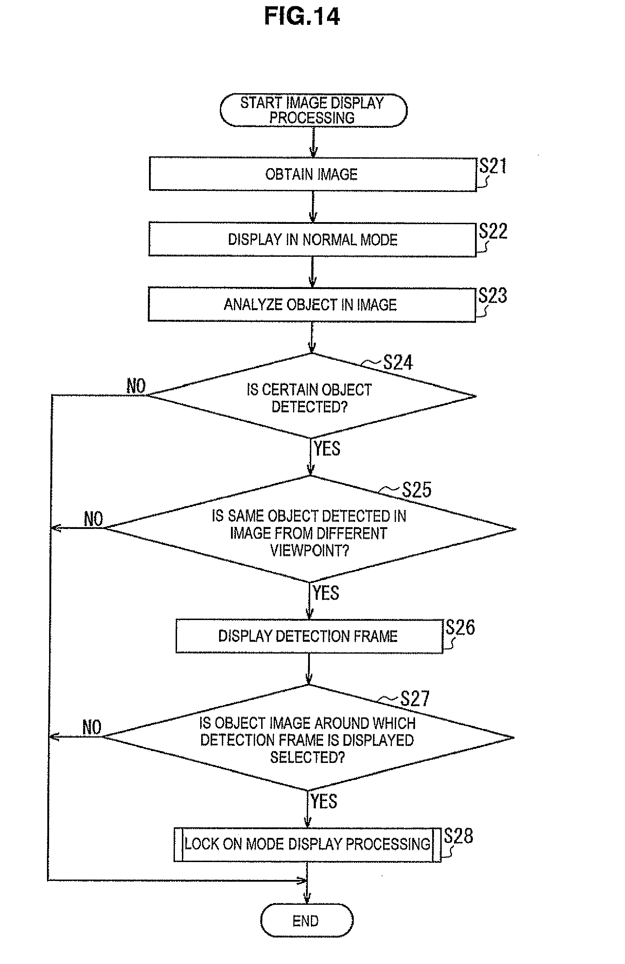

Next, an example of an image display processing by the browsing terminals 210 to 240 will be explained with reference to the flow chart shown in FIG. 14.

In Step S21, the image acquisition unit 451 obtains data of the images taken by each camera transmitted from the camera system 101.

In Step S22, the display image generation unit 454 displays any one of the images obtained in the processing of Step S21 in the normal mode. At that time, which image taken by the corresponding camera is to be displayed is determined by the initial setting, for example. Accordingly, for example, the image as described above with reference to FIG. 7 is displayed on the display 221 of the browsing terminal 220.

In Step 23, the object detection unit 452 analyses the image obtained by the image acquisition unit 451. Accordingly, whether a certain object (for example, person) is displayed in the image or not is analyzed, and the feature amount and the like of the object are obtained.

In Step S24, the object detection unit 452 determines whether the certain object (for example, person) is detected as a result of the processing of Step S23. When it is determined in Step S24 that the certain object is detected, the processing proceeds to Step S25.

In addition, at that time, the person database stored in the storage 261, the storage 271, and the like may be referred to to judge identicalness of the person stored in the person database and the person detected, for example. When it is judged that there is high identicalness, the attributes of the person are obtained.

In Step S25, the object detection unit 452 determines whether the same person is detected in an image (from a different viewpoint) taken by a different camera. At that time, the object detection unit 452 compares the feature amount such as a ratio of head to the whole body of the person, eye color, and hair color to determine whether the same person is displayed in an image taken by several cameras. When it is determined in Step S25 that the same person is detected in the image from a different viewpoint, the processing proceeds to Step S26.

In Step S26, a detection frame is displayed around the object that has been determine to be detected in the processing of Step S24. Accordingly, the object detection frame 321 is displayed around the object image 301 as shown in FIG. 7, for example.

In Step S27, the display mode control unit 453 determines whether the object image around which the detection frame is displayed in the processing of Step S26 is selected, for example. When it is determined in Step S27 that the object image around which the detection frame is displayed is selected, the processing proceeds to Step S28.

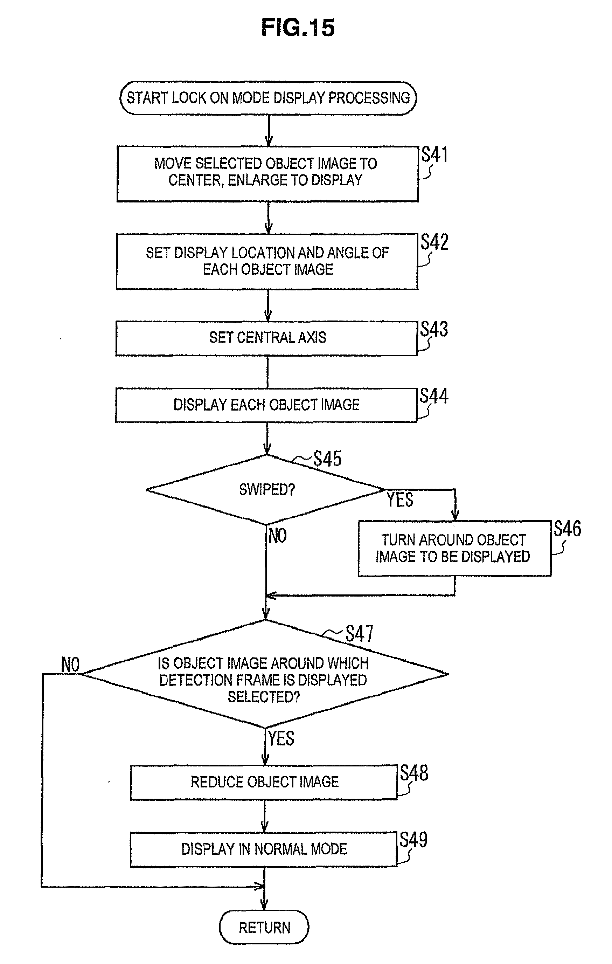

In Step S28, the display image generation.unit 454 executes a lock on mode display processing described later with reference to the flow chart shown in FIG. 15. Accordingly, an image is displayed in the lock on mode.

When it is determined in Step S24 that the certain object is not detected, the processings of Step S25 to Step S28 are skipped.

In addition, when it is determined in Step S25 that the same person is not detected in the image from a different viewpoint, the processings of Step S26 to Step S28 are skipped.

Further, when it is determined in Step S27 that the object image around which the detection frame is displayed is not selected, the processing of Step S28 is skipped.

In this manner, an image display processing is executed.

Next, a detailed example of a lock on mode display processing of Step S28 shown in FIG. 14 will be explained with reference to the flow chart shown in FIG. 15.

In Step S41, the display image generation unit 454 moves the object image determined to be selected in the processing of Step S27 to the center of the screen and enlarge the object image to be displayed. At that time, an image as shown in FIG. 8 is displayed, for example.

In Step S42, the display image generation unit 454 sets display location and angle of each object image. At that time, display location and angle of each object image are set based on, for example, information on installation location of cameras (for example, coordinate location) and information on the imaging direction of each camera (for example, vector representing an optical axis that is the center of the imaging area of each camera) as described above.

In Step S43, the display image generation unit 454 sets a central axis. At that time, for example, the person 300 is assumed to be almost cylindrical and a central axis of the cylinder is set as the central axis 340 as described above with reference to FIG. 9.

In Step S44, each object image is displayed based on the setting in the processing of Step S42 and the setting contents in the processing of Step S43. That is, for example, the image is displayed in the lock on mode as described above with reference to FIG. 9.

In Step S45, the display image generation unit 454 determines whether the screen is swiped. That is, it is determined whether an operation to turn around the object image displayed in the lock on mode is carried out.

When it is determined in Step S45 that the screen is swiped, the processing proceeds to Step S46. In Step S46, the display image generation unit 454 turns around the object image displayed in the lock on mode to display the object image. At that time, for example, the object image is turned around with the central axis 340 being the center as described above with reference to FIG. 10. Then, for example, the object image 303 is displayed at the front though the object image 301 is displayed at the front (as a reference) in FIG. 9.

When it is determined in Step S45 that the screen is not swiped, or after the processing of Step S46, the processing proceeds to Step S47.

In Step S47, the display image generation unit 454 determines whether the object image around which the detection frame is displayed is selected. When it is determined in Step S47 that the object image around which the detection frame is displayed is selected, the processing proceeds to Step S48.

In Step S48, the display image generation unit 454 reduces the object image. At that time, an image as shown in FIG. 11 is displayed, for example.

In Step S49, the display image generation unit 454 displays an image in the normal mode. At that time, the image is displayed in the normal mode as shown in FIG. 12, for example.

When it is determined in Step S47 that the object image around which the detection frame is displayed is not selected, the processings of Step S48 and Step S49 are skipped.

In this manner, a lock on mode display processing is executed.

Although display of an image on the browsing terminal 220 is used as an example in the above explanation, the similar display is also carried out on the browsing terminal 210, the browsing terminal 230, and the browsing terminal 240.

An example in which the embodiment of the present technology is applied to the monitoring system 100 and a dangerous person is monitored in consideration of, for example, mainly crime prevention and security purposes, is explained above. However, for example, the embodiment of the present technology may be applied to an imaging system in consideration of television broadcasting purpose for events such as a sport competition and a concert.

By applying the embodiment of the present technology to the above-described imaging system, for example, a remarkable player can be displayed in the lock on mode in a football match and performance of the player can be watched from various angles. For example, it is possible to switch between a view from own team side and a view from the opponent side as appropriate in accordance with preference of a user to watch performance in front of the goal.

When the series of the processings described above is executed by software, a program constituting the software is installed from a network such as internet or a recording medium including the removable medium 411 shown in FIG. 5 and the like.

The recoding medium includes not only one constituted by the removable medium 411 including a magnetic disk (including floppy disk (registered trademark)), an optical disk (including CD-ROM (Compact Disk-Read Only Memory) and DVD (Digital Versatile Disk)), a magneto optical disk (including MD (Mini-Disk) (registered trademark)), a semiconductor memory, or the like in which the program is recorded and which is distributed to deliver the program to a user, but also one constituted by the ROM 402 in which the program is recorded, a hard disk included in the storage unit 408, and the like.

The series of the processings described above herein of course includes the processings performed sequentially in compliance with the described orders, but also includes the processings performed in parallel or individually if not performed sequentially.

The embodiment of the present technology is not limited to the embodiment described above, and various modifications may be made without departing from the gist of the present technology.

It should be understood by those skilled in the art that various modifications, combinations, subcombinations and alterations may occur depending on design requirements and other factors insofar as they are within the scope of the appended claims or the equivalents thereof.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

The present technology can also include following configurations.
(1) A display control device including:
   an image acquisition unit obtaining each image taken by several cameras;
   an object detection unit detecting a particular object displayed in a certain image out of the obtained images; and
   a display control unit performing control so as to set a mode to display an object in an image different from the certain image where the particular object is detected using the object in the certain image as a reference and to display the object in the different image on the same screen when the same object is detected in the different image in the obtained several images.
(2) The display control device according to (1),
   wherein the display control unit sets a location to display the object in the different image and a shape of the object in the different image on the screen, based on a location and an imaging direction of the camera that takes the object in the certain image.
(3) The display control device according to (1) or (2),
   wherein the display control unit further sets a central axis of the object in the certain image and the object in the different image, and turns around the object in the certain image and the object in the different image with the central axis being the center to display the object in the certain image and the object in the different image on the screen based on an operation by a user.
(4) The display control device according to any one of (1) to (3),
   wherein the display control unit displays a certain detection frame around the object when the same object is detected in the image different from the certain image where the particular object is detected.
(5) The display control device according to any one of (1) to (4),
   wherein the display control unit includes as display control modes:
   a normal mode in which a predetermined image out of the images taken by the several cameras is displayed as the certain image; and
   a lock on mode in which the object in the certain image and the object in the different image are displayed on the same screen when the object in the certain image is selected by the user in a case where the same object is detected in the different image, and
   wherein an image of the object is enlarged to be displayed in the lock on mode.
(6) The display control device according to any one of (1) to (5),
   wherein the object detection unit extracts a feature amount of the detected object and obtains information showing an attribute of the object by searching a certain database based on the feature amount, and
   wherein the display control unit performs control so as to display the attribute together with the object.
(7) A display control method including:
   obtaining each image taken by several cameras by an image acquisition unit;
   detecting a particular object displayed in a certain image out of the obtained images by an object detection unit; and
   performing control so as to set a mode to display an object in an image different from the certain image where the particular object is detected using the object in the certain image as a reference and to display the object in the different image on the same screen by a display control unit when the same object is detected in the different image in the obtained several images.
(8) A program causing a computer to function as a display control device that includes:
   an image acquisition unit obtaining each image taken by several cameras;
   an object detection unit detecting a particular object displayed in a certain image out of the obtained images; and
   a display control unit performing control so as to set a mode to display an object in an image different from the certain image where the particular object is detected using the object in the certain image as a reference and to display the object in the different image on the same screen when the same object is detected in the different image in the obtained several images.
(9) A recording medium in which the program according to (8) is stored.

## Claims

1. A display control device comprising:
an image acquisition unit obtaining each image taken by several cameras;
an object detection unit detecting a particular object displayed in a certain image out of the obtained images; and
a display control unit performing control so as to set a mode to display an object in an image different from the certain image where the particular object is detected using the object in the certain image as a reference and to display the object in the different image on the same screen when the same object is detected in the different image in the obtained several images.

2. The display control device according to claim 1,
wherein the display control unit sets a location to display the object in the different image and a shape of the object in the different image on the screen, based on a location and an imaging direction of the camera that takes the object in the certain image.

3. The display control device according to claim 1,
wherein the display control unit further sets a central axis of the object in the certain image and the object in the different image, and turns around the object in the certain image and the object in the different image with the central axis being the center to display the object in the certain image and the object in the different image on the screen based on an operation by a user.

4. The display control device according to claim 1,
wherein the display control unit displays a certain detection frame around the object when the same object is detected in the image different from the certain image where the particular object is detected.

5. The display control device according to claim 1,
wherein the display control unit includes as display control modes:
a normal mode in which a predetermined image out of the images taken by the several cameras is displayed as the certain image; and
a lock on mode in which the object in the certain image and the object in the different image are displayed on the same screen when the object in the certain image is selected by the user in a case where the same object is detected in the different image, and
wherein an image of the object is enlarged to be displayed in the lock on mode.

6. The display control device according to claim 1,
wherein the object detection unit extracts a feature amount of the detected object and obtains information showing an attribute of the object by searching a certain database based on the feature amount, and
wherein the display control unit performs control so as to display the attribute together with the obj ect.

7. A display control method comprising:
obtaining each image taken by several cameras by an image acquisition unit;
detecting a particular object displayed in a certain image out of the obtained images by an object detection unit; and
performing control so as to set a mode to display an object in an image different from the certain image where the particular object is detected using the object in the certain image as a reference and to display the object in the different image on the same screen by a display control unit when the same object is detected in the different image in the obtained several images.

8. A program causing a computer to function as a display control device that comprises:
an image acquisition unit obtaining each image taken by several cameras;
an object detection unit detecting a particular object displayed in a certain image out of the obtained images; and
a display control unit performing control so as to set a mode to display an object in an image different from the certain image where the particular object is detected using the object in the certain image as a reference and to display the object in the different image on the same screen when the same object is detected in the different image in the obtained several images.

9. A recording medium in which the program according to claim 8 is stored.
